# FASCICULE DE BREVET EUROPEEN

(11) **EP 3 986 728 B1**
(45) Date de publication et mention de la délivrance du brevet: **16.07.2025**
(21) Numéro de dépôt: 20742349.2
(22) Date de dépôt: 16.06.2020
(51) Int. Cl.: B60H 1/00, B60H 1/32

(54) **PROCÉDÉ DE CONTROLE D'UN CIRCUIT DE CONDITIONNEMENT THERMIQUE D'UN FLUX D'AIR**
VERFAHREN ZUR STEUERUNG EINES THERMISCHEN LUFTSTROMKLIMAKREISLAUFS
METHOD FOR CONTROLLING AN AIR-FLOW THERMAL CONDITIONING CIRCUIT

(30) Priorité: 19.06.2019 FR 1906588
(43) Date de publication de la demande: 27.04.2022
(73) Titulaire: VALEO SYSTEMES THERMIQUES, 78320 Le Mesnil Saint-Denis (FR)
(72) Inventeur: PORTO, Muriel, 78320 LE MESNIL SAINT DENIS (FR); NOUAINIA, Wissem, 78320 LE MESNIL SAINT-DENIS (FR); LIU, Jin-Ming, 78320 LE MESNIL SAINT-DENIS (FR); BEAUVIS, Régis, 78320 LE MESNIL SAINT-DENIS (FR)
(74) Mandataire: Valeo Systèmes Thermiques
(86) Numéro de dépôt international: PCT/FR2020/051035
(87) Numéro de publication internationale: WO 2020/254756

(56) Documents cités:
- EP-A1- 2 878 468
- EP-A1- 3 031 641
- US-A1- 2003 230 094
- US-A1- 2015 233 627
- US-A1- 2018 056 941

## Description

La présente invention se rapporte au domaine des circuits de conditionnement thermique d'un flux d'air, en particulier pour véhicule automobile. De tels systèmes permettent de contrôler notamment la température régnant dans l'habitacle du véhicule.

Sur les véhicules à propulsion purement électrique, le chauffage de l'habitacle utilise une partie de l'énergie contenue dans les batteries, ce qui tend à réduire leur autonomie, surtout par temps froid. Afin de minimiser la réduction d'autonomie par temps froid, il est bien connu d'employer un circuit de conditionnement thermique pouvant fonctionner selon un mode « pompe à chaleur ». Pour cela, un fluide réfrigérant subit un cycle thermodynamique au cours duquel le fluide réfrigérant est d'abord comprimé. Le fluide à haute pression subit une condensation libérant une quantité de chaleur permettant d'assurer le chauffage par exemple de l'habitacle du véhicule. Après condensation, le fluide est détendu et subit une vaporisation dans un échangeur thermique en contact avec l'air extérieur au véhicule. Le fluide se vaporise en prélevant la chaleur nécessaire à la vaporisation dans le flux d'air extérieur. Cette partie du cycle thermodynamique ne consomme donc pas d'énergie électrique. Cette technologie est donc particulièrement intéressante pour les véhicules électriques, puisqu'elle permet de limiter la consommation électrique consacrée au chauffage de l'habitacle. Une plus grande partie de la capacité des batteries peut donc être consacrée à la propulsion du véhicule, et l'autonomie du véhicule est ainsi favorisée.

Le chauffage de l'habitacle peut par exemple être indirect, c'est-à-dire que la chaleur de condensation du fluide réfrigérant permet, dans un échangeur bifluide, de réchauffer un fluide caloporteur, comme un liquide caloporteur. Le liquide caloporteur circule ensuite dans un échangeur thermique traversé par un flux d'air destiné à l'habitable, ce qui permet de chauffer l'habitacle. Lorsqu' il est nécessaire de refroidir le flux d'air destiné à l'habitacle, le fluide réfrigérant est détendu dans un autre échangeur thermique en contact thermique avec le flux d'air destiné à alimenter l'habitacle. Cet échangeur fonctionne alors en évaporateur, et permet de refroidir l'habitacle en prélevant la chaleur de vaporisation du fluide réfrigérant dans le flux d'air destiné à l'habitacle.

Il est connu du document US2003/230094 un système de climatisation permettant de passer d'un mode de refroidissement à un mode de chauffage en utilisant le même échangeur de chaleur. Le système comprend une unité de contrôle pouvant détecter la rétention d'eau dans l'échangeur de chaleur et arrêter l'opération de chauffage si c'est le cas.

Il est connu, par exemple par le brevet EP 2933586 B1 du demandeur, d'assurer une partie du chauffage de l'air en condensant une partie du fluide réfrigérant dans cet échangeur thermique lors du fonctionnement en mode pompe à chaleur. Dans ce cas, cet échangeur thermique vient seconder l'échangeur bifluide pour absorber l'énergie du fluide réfrigérant, ce qui améliore la performance du chauffage de l'habitacle. Cet échangeur thermique fonctionne durant cette phase en condenseur.

Autrement dit, le même échangeur thermique peut fonctionner comme évaporateur dans certaines phases de fonctionnement et comme condenseur dans d'autres phases de fonctionnement. Lors des phases de fonctionnement en mode évaporateur, l'air en contact avec l'échangeur thermique est refroidi. La vapeur d'eau présente dans l'air peut ainsi se condenser au contact de l'échangeur dont la surface peut être à une température inférieure à la température de rosée de l'air. La surface de l'échangeur a ainsi tendance à se recouvrir peu à peu d'eau sous forme liquide lors d'une phase de fonctionnement en mode refroidissement. Si par la suite une phase de chauffage est déclenchée alors que de l'eau sous forme liquide est présente sur l'échangeur thermique, celle-ci a tendance à se vaporiser et à être entrainée par le flux d'air destiné à l'habitacle. Si les vitres du véhicule sont froides, la vapeur d'eau entrainée va condenser sur les vitres et créer de la buée. Lorsque la quantité d'eau présente sur l'évaporateur est importante, cette buée peut perturber sérieusement la visibilité et devenir un danger pour la conduite. Il convient donc de gérer de manière particulière les transitions entre les modes de fonctionnement afin d'éviter la création de buée, en particulier sur le pare-brise.

A cet effet, l'invention propose un procédé de contrôle d'un circuit de conditionnement thermique d'un flux d'air, notamment destiné à un habitacle d'un véhicule automobile,
le circuit comprenant un échangeur thermique configuré pour être parcouru par un fluide réfrigérant et échanger de la chaleur avec le flux d'air, l'échangeur thermique étant configuré pour fonctionner sélectivement au moins selon :
un mode dit refroidissement dans lequel le flux d'air est refroidi,
un mode dit chauffage dans lequel le flux d'air est chauffé,
le procédé comportant les étapes :
   - Evaluer un degré d'humidité dans une région en contact avec une surface extérieure de l'échangeur thermique,
   - Détecter une consigne de passage du mode refroidissement au mode chauffage,
   - Si le degré d'humidité évalué est inférieur à un premier seuil prédéterminé, autoriser la circulation de fluide réfrigérant dans l'échangeur thermique en réponse à la consigne de passage en mode chauffage,
   - Si le degré d'humidité évalué est supérieur à un deuxième seuil prédéterminé, interdire la circulation du fluide réfrigérant dans l'échangeur thermique pendant une première durée prédéterminée de façon à retarder le passage en mode chauffage.

Lorsque le degré d'humidité évalué sur l'échangeur thermique est suffisamment faible pour ne pas risquer la formation de buée, le passage en mode chauffage de l'échangeur thermique est autorisé dès la réception de la consigne. Dans le cas où le degré d'humidité évalué est trop élevé, c'est-à-dire que la surface de l'échangeur thermique comprend trop de gouttelettes d'eau, le passage en mode chauffage est retardé par rapport à la réception de la consigne de passage en mode chauffage. Autrement dit, la consigne de passage en mode chauffage n'est pas appliquée immédiatement, mais après une temporisation. Le retard ainsi introduit peut être utilisé pour réduire le degré d'humidité de l'échangeur thermique, notamment en faisant en sorte qu'un débit d'air traverse l'échangeur afin de permettre l'évaporation de l'humidité présente et ainsi l'assèchement de sa surface. Il est ainsi possible d'obtenir des conditions dans lesquelles le passage en mode chauffage ne posera pas de problème.

Selon un mode de réalisation, le procédé de contrôle comporte l'étape :
- Si le degré d'humidité évalué est compris entre le premier seuil prédéterminé et le deuxième seuil prédéterminé, interdire le passage du fluide réfrigérant dans l'échangeur thermique pendant une deuxième durée prédéterminée de façon à retarder le passage en mode chauffage.

La durée de temporisation pendant laquelle le passage en mode chauffage est interdit peut ainsi être ajustée au degré d'humidité évalué sur l'échangeur thermique. Le principe est que plus le degré d'humidité est élevé, plus il faut attendre longtemps avant d'autoriser le passage en mode chauffage.

Selon un mode de réalisation du procédé, le circuit de conditionnement thermique comprend un dispositif de compression configuré pour augmenter la pression du fluide réfrigérant.

Par exemple, le dispositif de compression est un compresseur à entrainement électrique.

Selon un exemple de mise en œuvre du procédé, l'interdiction de la circulation du fluide réfrigérant dans l'échangeur thermique est obtenue en maintenant le dispositif de compression à l'arrêt.

Lorsque le compresseur est à l'arrêt, la circulation de fluide réfrigérant dans le circuit de conditionnement thermique est négligeable, et il est considéré qu'il n'y a alors pas de circulation de fluide réfrigérant dans l'échangeur thermique.

Selon un autre exemple de mise en œuvre du procédé, l'interdiction de la circulation du fluide réfrigérant dans l'échangeur thermique est obtenue en ouvrant une branche de contournement permettant au fluide réfrigérant de contourner l'échangeur thermique.

Une autre possibilité pour interdire la circulation du fluide réfrigérant dans l'échangeur thermique est d'ouvrir une branche du circuit qui contourne l'échangeur thermique. Le fluide réfrigérant passe alors dans la branche de contournement plutôt que dans l'échangeur thermique, ce qui revient à interdire la circulation dans l'échangeur thermique.

Avantageusement, la branche de contournement comporte une vanne d'arrêt configuré pour empêcher la circulation de fluide dans la branche de contournement.

La vanne d'arrêt permet d'empêcher le fluide réfrigérant de contourner l'échangeur thermique lorsque l'échangeur thermique peut fonctionner normalement.

Selon un mode de réalisation du procédé de contrôle, le circuit comporte un dispositif de chauffage additionnel configuré pour chauffer le flux d'air, le procédé comportant l'étape :
- Pendant l'étape d'interdiction de passage du réfrigérant dans l'échangeur thermique, activer le dispositif de chauffage additionnel afin de chauffer le flux air.

Comme le passage en mode chauffage de l'échangeur thermique est interdit dans cette phase de fonctionnement, un autre dispositif de chauffage est activé à la place. Ce dispositif de chauffage additionnel permet d'assurer la puissance de chauffage souhaitée.

Selon un exemple de mise en œuvre du procédé, le dispositif de chauffage additionnel est activé pendant toute la durée de l'étape d'interdiction de passage du réfrigérant dans l'échangeur thermique.

Selon un autre exemple de mise en œuvre du procédé, le dispositif de chauffage additionnel est activé pendant une partie de la durée de l'étape d'interdiction de passage du réfrigérant dans l'échangeur thermique.

Selon un mode de réalisation, le dispositif de chauffage additionnel est disposé, selon le sens de circulation du flux d'air, en aval de l'échangeur thermique.

Cette disposition permet d'éviter que le flux d'air destiné à l'habitacle du véhicule se charge de l'humidité contenue sur la surface de l'échangeur thermique.

Selon un exemple de mise en œuvre du procédé, la première durée prédéterminée d'interdiction de circulation du fluide réfrigérant dans l'échangeur thermique est comprise entre 8 et 12 minutes, de préférence comprise entre 9 et 11 minutes.

Ces plages de valeurs permettent d'assurer un fonctionnement sans formation de buée lorsque l'échangeur thermique passe en mode chauffage alors qu'un degré d'humidité élevé a été évalué.

Selon un exemple de mise en œuvre du procédé, la deuxième durée prédéterminée d'interdiction de circulation du fluide réfrigérant dans l'échangeur thermique est comprise entre 3 et 5 minutes, de préférence égale à 4 minutes.

Comme précédemment, ces plages de valeurs permettent d'assurer un fonctionnement sans formation de buée lorsque l'échangeur thermique passe en mode chauffage, dans le cas où un degré d'humidité intermédiaire a été évalué.

Selon un mode de réalisation, le dispositif de chauffage additionnel comporte une résistance électrique configurée pour échanger de la chaleur avec le flux d'air.

Une résistance électrique permet d'assurer une puissance thermique élevée et présente une faible inertie thermique.

Selon un mode de réalisation, le dispositif de chauffage additionnel comprend une résistance électrique configurée pour chauffer un fluide caloporteur circulant dans un échangeur thermique échangeant de la chaleur avec le flux d'air.

Un chauffage additionnel avec fluide caloporteur est facilement contrôlable, en raison de l'inertie thermique du fluide caloporteur. De préférence, le fluide caloporteur est un liquide caloporteur.

Selon un autre mode de réalisation, le dispositif de chauffage additionnel comprend un bruleur configuré pour bruler un combustible.

Selon un exemple de mise en œuvre, le procédé de contrôle comporte l'étape :
- Pendant l'étape d'activation du dispositif de chauffage additionnel, assurer une valeur minimale au débit du flux d'air en contact thermique avec l'échangeur thermique.

Le fait d'assurer un débit d'air minimal permet d'accélérer l'évaporation de l'eau de la surface de l'échangeur thermique. Autrement dit, l'air traversant l'échangeur thermique permet d'assécher celui-ci. Le débit d'air est choisi de façon à ce que l'évaporation soit suffisamment lente pour ne pas saturer l'air traversant l'échangeur, de façon à ne pas risquer la formation de buée. De plus, le débit minimal est choisi pour ne pas être perceptible par l'utilisateur lorsque celui çi a choisi de ne pas activer l'installation de conditionnement d'air de son véhicule.

Selon un exemple de mise en œuvre, le procédé de contrôle comporte l'étape :
- Pendant l'étape d'activation du dispositif de chauffage additionnel, augmenter le débit du flux d'air en contact thermique avec l'échangeur thermique.

L'augmentation du débit d'air en contact avec l'échangeur thermique permet d'accélérer l'évaporation de l'eau de la surface de l'échangeur thermique. L'augmentation du débit d'air est choisie de façon à ce que l'évaporation reste suffisamment lente pour qu'il n'y ait pas de risque de formation de buée. Dans cette étape optionnelle, le débit d'air est augmenté même si le critère de débit d'air minimal est déjà respecté.

Par exemple, l'augmentation du débit du flux d'air est obtenue par augmentation d'un régime de rotation d'un groupe moto-ventilateur.

Selon une caractéristique de l'invention, le procédé de contrôle comporte l'étape :
- Déterminer une durée pendant laquelle l'échangeur thermique fonctionne en mode refroidissement,
- Si la durée de fonctionnement en mode refroidissement est supérieure à une troisième durée prédéterminée, incrémenter le degré d'humidité évalué sur l'échangeur thermique.

La durée de fonctionnement de l'échangeur thermique en mode refroidissement, c'est-à-dire en tant qu'évaporateur, permet d'évaluer la quantité d'eau qui se forme au voisinage de l'échangeur thermique. Ainsi, il est possible d'évaluer le degré d'humidité dans une région en contact avec une surface extérieure de l'échangeur thermique. Le mode « refroidissement » de l'échangeur thermique peut correspondre à plusieurs modes de fonctionnement distincts du circuit de conditionnement thermique. En effet, le mode « climatisation » et le mode « déshumidification » de l'air de l'habitacle du véhicule font tous les deux fonctionner l'échangeur thermique en mode « refroidissement ».

Selon un exemple de mise en œuvre du procédé, le degré d'humidité évalué sur l'échangeur thermique est évalué sur une échelle discrète comportant deux niveaux.

Une échelle à deux niveaux permet de différencier un état « sec » et un état « mouillé » de l'échangeur thermique. Cette solution est simple à mettre en œuvre.

Selon une variante de mise en œuvre du procédé, le degré d'humidité évalué sur l'échangeur thermique est évalué sur une échelle discrète comportant trois niveaux.

Une échelle à trois niveaux permet de différencier un état « sec », un état « partiellement mouillé » et un état « complètement mouillé » de l'échangeur thermique. Elle permet un bon compromis entre performance et difficulté de mise en œuvre.

Selon une autre variante de mise en œuvre du procédé, le degré d'humidité évalué sur l'échangeur thermique est évalué sur une échelle discrète comportant N niveaux, N étant un nombre entier strictement supérieur à 3.

Une échelle à N niveaux, avec N strictement supérieur à trois, permet de différencier un état « sec », un état « complètement mouillé », et plusieurs états « partiellement mouillé » caractérisant des degrés croissants d'humidité de l'échangeur thermique. Une telle variante peut permettre une modélisation plus fine des phénomènes de condensation et d'évaporation de l'eau sur l'échangeur thermique.

Selon un exemple de mise en œuvre du procédé, la troisième durée prédéterminée après laquelle le degré d'humidité évalué sur l'échangeur thermique est incrémenté est une valeur constante.

Cette modélisation est la plus simple à mettre en œuvre.

Selon un autre exemple de mise en œuvre du procédé, la troisième durée prédéterminée après laquelle le degré d'humidité évalué sur l'échangeur thermique est incrémenté est déterminée en fonction d'une valeur d'un débit d'air en contact avec l'échangeur thermique.

La précision de la modélisation des phénomènes de condensation et d'évaporation d'eau sur l'échangeur thermique peut ainsi être améliorée.

Selon un mode de réalisation, la troisième durée prédéterminée après laquelle le degré d'humidité évalué sur l'échangeur thermique est incrémenté est déterminée en fonction d'une valeur de la température ambiante.

De même, la prise en compte de la température ambiante permet d'améliorer la précision de la modélisation.

Selon un mode de réalisation, la température ambiante est mesurée par un capteur de température.

Selon un mode de réalisation, la troisième durée prédéterminée après laquelle le degré d'humidité évalué sur l'échangeur thermique est incrémenté est déterminée en fonction d'un taux d'humidité ambiante.

Comme précédemment, la prise en compte du taux d'humidité dans l'air ambiant permet d'améliorer la précision de la modélisation.

Selon un mode de réalisation, le taux d'humidité ambiante est mesuré par un capteur d'humidité.

Selon un mode de réalisation, la troisième durée prédéterminée après laquelle le degré d'humidité évalué sur l'échangeur thermique est incrémentée est déterminée en fonction d'une valeur de la température du flux d'air en aval de l'échangeur thermique.

A nouveau, la prise en compte de la température du flux d'air soufflé par l'échangeur thermique permet d'améliorer la précision de la modélisation. Les paramètres listés peuvent être utilisés indépendamment ou en combinaison.

Selon un mode de réalisation, la température du flux d'air en aval de l'échangeur thermique est mesurée par un capteur de température.

Selon une caractéristique de l'invention, le procédé de contrôle comporte l'étape :
- Déterminer une durée pendant laquelle l'échangeur thermique fonctionne dans un mode différent du mode refroidissement,
- Si la durée de fonctionnement dans un mode différent du mode refroidissement est supérieure à une quatrième durée prédéterminée, décrémenter le degré d'humidité évalué sur l'échangeur thermique.

On entend, par mode différent du mode « refroidissement », le mode « chauffage » et le mode « inactif ». Dans le mode « chauffage », l'échangeur thermique échange de la chaleur avec l'air au contact de sa surface afin de chauffer l'air. Dans le mode « inactif », l'échangeur n'échange pas de chaleur avec l'air au contact de sa surface. Ce mode peut par exemple être déclenché par le conducteur du véhicule lorsqu'il ne souhaite pas utiliser le circuit de climatisation du véhicule.

Selon un mode de réalisation, la quatrième durée prédéterminée après laquelle le degré d'humidité évalué sur l'échangeur thermique est décrémenté est déterminée en fonction d'une valeur d'un débit d'air en contact avec l'échangeur thermique.

La valeur du débit d'air en contact avec l'échangeur intervient dans le phénomène physique d'évaporation des gouttelettes d'eau présentes sur la surface de l'échangeur. Prendre en compte ce paramètre permet d'améliorer la modélisation réalisée par le procédé.

Selon un mode de réalisation, la quatrième durée prédéterminée après laquelle le degré d'humidité évalué sur l'échangeur thermique est décrémenté est déterminée en fonction d'une valeur de la température ambiante.

Selon un mode de réalisation, la quatrième durée prédéterminée après laquelle le degré d'humidité évalué sur l'échangeur thermique est décrémenté est déterminée en fonction d'un taux d'humidité ambiante.

Selon un mode de réalisation, la quatrième durée prédéterminée après laquelle le degré d'humidité évalué sur l'échangeur thermique est décrémenté est déterminée en fonction d'une valeur de la température du flux d'air en amont de l'échangeur thermique.

Comme précédemment, la prise en compte des différentes grandeurs physiques intervenant dans le phénomène d'évaporation des gouttelettes d'eau présentes sur la surface de l'échangeur permet d'améliorer la précision du procédé.

Selon une caractéristique de l'invention, le procédé de contrôle comporte l'étape :
- A la mise hors fonctionnement du véhicule, mémoriser le degré d'humidité évalué sur l'échangeur thermique.

Selon un mode de réalisation, le procédé de contrôle comporte l'étape :
- A la mise hors fonctionnement du véhicule, écrire le degré d'humidité évalué sur l'échangeur thermique dans une mémoire permanente d'une unité électronique de contrôle.

La valeur mémorisée peut ainsi être relue lorsque le véhicule est remis en fonctionnement après une période d'inactivité.

Selon un mode de réalisation, le procédé de contrôle comprend l'étape :
- A la mise en fonctionnement du véhicule, déterminer le degré d'humidité évalué mémorisé à la mise hors fonctionnement du véhicule.

Selon un mode de réalisation, le procédé de contrôle comprend l'étape :
- A la mise en fonctionnement du véhicule, déterminer une durée d'arrêt du véhicule.

Selon un exemple de mise en œuvre de l'invention, le procédé de contrôle comporte l'étape :
- Si la durée d'arrêt est supérieure à une durée d'arrêt prédéterminée, attribuer une valeur nulle au degré d'humidité évalué sur l'échangeur thermique.

En cas d'arrêt suffisamment long, il est considéré que toute l'eau qui était présente sur l'échangeur de chaleur lors de l'arrêt du véhicule a eu le temps de s'évaporer pendant que le véhicule était arrêté. L'échangeur thermique est ainsi sec.

Selon un exemple de mise en œuvre de l'invention, le procédé de contrôle comporte l'étape :
- Si la durée d'arrêt est inférieure ou égale à une durée d'arrêt prédéterminée, attribuer la valeur mémorisée au degré d'humidité évalué sur l'échangeur thermique.

Lorsque l'arrêt du véhicule n'est pas suffisamment long, il est considéré que la quantité d'eau présente sur l'échangeur thermique est la même que celle évaluée lors de l'arrêt du véhicule.

Selon un mode de réalisation, la durée d'arrêt prédéterminée est une valeur constante.

Cette solution est simple à mettre en œuvre.

Selon un autre mode de réalisation, la durée d'arrêt prédéterminée est déterminée en fonction du degré d'humidité évalué mémorisé à la mise hors fonctionnement du véhicule.

Il est ainsi possible de moduler la durée d'arrêt du véhicule permettant de considérer que toute l'eau présente sur l'échangeur thermique lors de l'arrêt du véhicule a disparu pendant cet arrêt du véhicule. Plus le degré d'humidité évalué est élevé, plus la durée d'arrêt permettant de considérer que toute l'eau s'est évaporée est longue.

L'invention se rapporte aussi une unité de contrôle électronique, configurée pour mettre en œuvre le procédé de contrôle précédemment décrit.

L'invention concerne également un circuit de conditionnement thermique d'un flux d'air, notamment destiné à un habitacle d'un véhicule automobile,
le circuit comprenant un échangeur thermique configuré pour être parcouru par un fluide réfrigérant et échanger de la chaleur avec le flux d'air, l'échangeur thermique étant configuré pour fonctionner sélectivement au moins selon :
   - un mode dit refroidissement dans lequel le flux d'air est refroidi,
   - un mode dit chauffage dans lequel le flux d'air est chauffé,
le circuit de conditionnement thermique étant configuré pour :
   - Evaluer un degré d'humidité dans une région en contact une surface extérieure de l'échangeur thermique,
   - Détecter une consigne de passage du mode refroidissement au mode chauffage,
   - Si le degré d'humidité évalué est inférieur à un premier seuil prédéterminé, autoriser la circulation de fluide réfrigérant dans l'échangeur thermique en réponse à la consigne de passage en mode chauffage,
   - Si le degré d'humidité évalué est supérieur à un deuxième seuil prédéterminé, interdire la circulation du fluide réfrigérant dans l'échangeur thermique pendant une première durée prédéterminée de façon à retarder le passage en mode chauffage.

D'autres caractéristiques et avantages de l'invention apparaîtront à la lecture de la description détaillée des modes de réalisation donnée à titre d'exemples non limitatifs, accompagnée des figures ci-dessous :
- la [Figure 1] représente un schéma de principe d'un circuit de conditionnement thermique pouvant mettre en œuvre le procédé selon l'invention,
- la [Figure 2] représente un échangeur thermique du circuit de conditionnement thermique de la figure 1,
- la [Figure 3] est un diagramme pression, enthalpie illustrant un mode de fonctionnement du circuit de conditionnement thermique de la figure 1,
- la [Figure 4] est un schéma bloc illustrant les différentes étapes du procédé selon l'invention,
- la [Figure 5] représente l'évolution temporelle de divers paramètres illustrant les différentes étapes du procédé selon l'invention,
- la [Figure 6] représente l'évolution temporelle de divers paramètres illustrant les différentes étapes du procédé selon l'invention,
- la [Figure 7] représente l'évolution temporelle de divers paramètres illustrant les différentes étapes du procédé selon l'invention,
- la [Figure 8] représente l'évolution temporelle de divers paramètres illustrant les différentes étapes du procédé selon l'invention,
- la [Figure 9] représente l'évolution temporelle de divers paramètres illustrant les différentes étapes du procédé selon l'invention,
- la [Figure 10] représente l'évolution temporelle de divers paramètres illustrant les différentes étapes du procédé selon l'invention.

Afin de faciliter la lecture des figures, les différents éléments ne sont pas nécessairement représentés à l'échelle. Sur ces figures, les éléments identiques portent les mêmes numéros de référence.

Certains éléments ou paramètres peuvent être indexés, c'est-à-dire désignés par exemple par premier élément ou deuxième élément, ou encore premier paramètre et second paramètre, etc. Cette indexation a pour but de différencier des éléments ou paramètres similaires, mais distincts. Cette indexation n'implique pas une priorité d'un élément ou paramètre par rapport à un autre et on peut interchanger les dénominations. Dans la description qui suit, le terme « en amont » signifie qu'un élément est placé avant un autre par rapport au sens de circulation d'un fluide. De manière analogue, le terme « en aval » signifie qu'un élément est placé après un autre par rapport au sens de circulation du fluide.

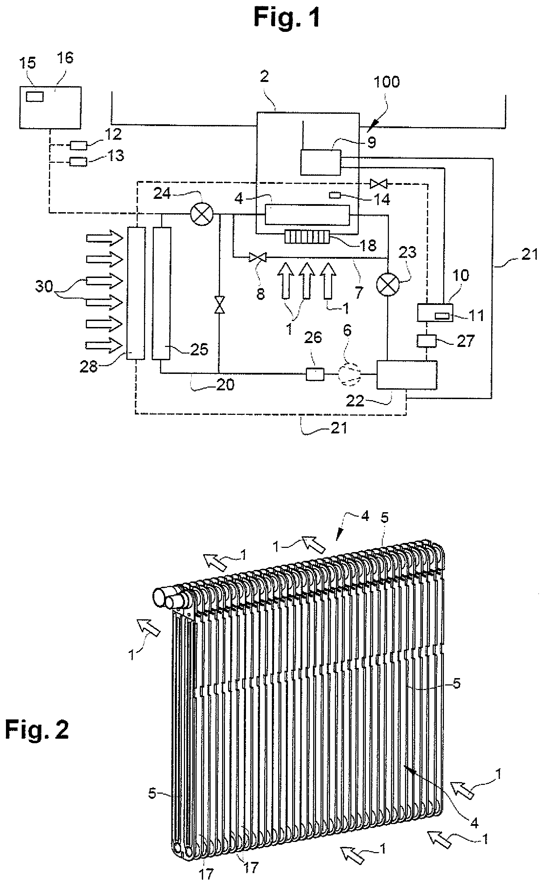

On a représenté sur la figure 1 un circuit de conditionnement thermique 100 d'un flux d'air 1. Ce flux d'air 1 est destiné à alimenter en air un habitacle 2 d'un véhicule automobile. Le circuit de conditionnement thermique 100 permet de réguler la température ainsi que le taux d'humidité de l'air présent dans l'habitacle 2 du véhicule, et assure ainsi le confort thermique des passagers.

Dans l'exemple représenté sur la figure 1, le circuit de conditionnement thermique 100 comprend un circuit de fluide réfrigérant 20 et un circuit de fluide caloporteur 21. Un échangeur bifluide 22 permet d'assurer un couplage thermique entre les deux circuits 20 et 21. Autrement dit, le fluide réfrigérant et le fluide caloporteur peuvent réaliser un échange thermique au niveau de l'échangeur bifluide 22. Le fluide caloporteur est un liquide caloporteur, comme par exemple un mélange comportant de l'eau et du glycol. Le fluide réfrigérant de la boucle de fluide réfrigérant est ici un fluide chimique tel que le R134a, R1234yf.

Le circuit de conditionnement thermique 100 permet de réaliser plusieurs modes de fonctionnement. Parmi les modes de fonctionnement possibles, on peut citer le mode chauffage, le mode déshumidification, le mode refroidissement.

Le circuit de conditionnement thermique 100 comprend un dispositif de compression 6 configuré pour augmenter la pression du fluide réfrigérant. Sur l'exemple décrit, le dispositif de compression 6 est un compresseur à entrainement électrique.

En aval de la sortie du dispositif de compression 6, le circuit de fluide réfrigérant 20 comporte dans l'ordre de parcours du fluide réfrigérant : l'échangeur bifluide 22, un premier dispositif de détente 23, un échangeur thermique 4, un deuxième dispositif de détente 24, un deuxième échangeur thermique 25, un dispositif d'accumulation 26 de fluide réfrigérant et l'entrée du dispositif de compression 6.

Le circuit 100 comprend un échangeur thermique 4 configuré pour être parcouru par un fluide réfrigérant et échanger de la chaleur avec le flux d'air 1, l'échangeur thermique 4 étant configuré pour fonctionner sélectivement au moins selon :
- un mode dit refroidissement dans lequel le flux d'air 1 est refroidi,
- un mode dit chauffage dans lequel le flux d'air 1 est chauffé.

Le circuit de conditionnement thermique 100 est configuré pour :
- Evaluer un degré d'humidité dans une région en contact une surface extérieure 5 de l'échangeur thermique 4,
- Détecter une consigne de passage du mode refroidissement au mode chauffage,
- Si le degré d'humidité évalué H est inférieur à un premier seuil prédéterminé s1, autoriser la circulation de fluide réfrigérant dans l'échangeur thermique 4 en réponse à la consigne de passage en mode chauffage,
- Si le degré d'humidité évalué H est supérieur à un deuxième seuil prédéterminé s2, interdire la circulation du fluide réfrigérant dans l'échangeur thermique 4 pendant une première durée prédéterminée D1 de façon à retarder le passage en mode chauffage.

Le deuxième échangeur thermique 25 est configuré pour échanger de la chaleur avec un flux d'air extérieur 30.

Le circuit de conditionnement thermique 100 comprend en outre plusieurs capteurs de mesure de la pression du fluide réfrigérant ainsi que de la température du fluide réfrigérant. La température du flux d'air 1 en aval de l'échangeur thermique 4 est mesurée par un capteur de température 14. Autrement dit, le capteur 14 est disposé en aval de l'échangeur 14. La température ambiante est mesurée par un capteur de température 12. Le taux d'humidité ambiante est mesuré par un capteur d'humidité 13.

Une unité électronique de contrôle 16 reçoit les informations des différents capteurs. L'unité électronique 16 reçoit également les consignes demandées par les occupants du véhicule, comme par exemple la température souhaitée à l'intérieur de l'habitacle. L'unité électronique 16 met en œuvre les lois de contrôle permettant le pilotage des différents actionneurs, afin d'assurer le contrôle du circuit de conditionnement thermique 100. Afin de simplifier la figure, seules quelques liaisons électriques entre l'unité de contrôle 16 et les différents capteurs et actionneurs ont été représentés.

En particulier, l'unité de contrôle électronique 16 est configurée pour mettre en œuvre le procédé de contrôle selon l'invention.

Le circuit de fluide caloporteur 20 comprend un échangeur thermique 9 pouvant échanger de la chaleur avec le flux d'air 1. L'échangeur thermique 9 est disposé, selon le sens d'écoulement du flux d'air 1, en aval de l'échangeur thermique 4. Autrement dit, le flux d'air 1 traverse d'abord l'échangeur thermique 4 avant de traverser l'échangeur thermique 9. Ces deux échangeurs thermiques sont disposés dans l'installation de chauffage, ventilation et climatisation située dans l'habitacle 2 du véhicule.

Le circuit de fluide caloporteur 21 comprend aussi un échangeur thermique 28 pouvant échanger de la chaleur avec un flux d'air 30 extérieur à l'habitacle. Cet échangeur thermique 28 peut être disposé dans la face avant du véhicule, derrière les ouvertures de la calandre qui permettent de laisser passer le flux d'air extérieur 30 vers l'échangeur 28.

Une pompe 27 permet de faire circuler le fluide caloporteur dans le circuit de fluide caloporteur 21.

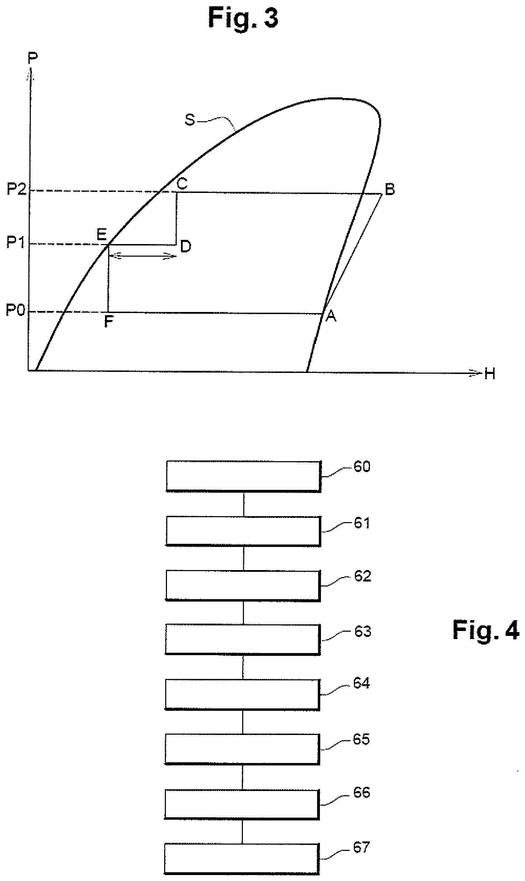

Le fonctionnement du circuit de conditionnement thermique 100 en mode chauffage de l'habitacle est illustré à la figure 3. Le diagramme de la figure 3 représente dans le plan pression, enthalpie le cycle thermodynamique réalisé par le fluide réfrigérant. La courbe S est la courbe de saturation du fluide réfrigérant.

En mode chauffage, le fluide réfrigérant est d'abord comprimé par le compresseur 6 jusqu'à une pression P2 dite haute pression. Le point A schématise l'état du fluide réfrigérant en entrée du compresseur 6 et le point B schématise l'état du fluide en sortie du compresseur 6. Le fluide réfrigérant passe ensuite dans l'échangeur bifluide 22, et cède de la chaleur au fluide caloporteur. La quantité de chaleur cédée est donnée par la différence d'enthalpie entre le point B et le point C. Le point C schématise l'état du fluide réfrigérant en sortie de l'échangeur bifluide 22. Le fluide réfrigérant est ensuite partiellement détendu au niveau du premier détendeur 23, jusqu'à une pression P1 dite pression intermédiaire. Le fluide réfrigérant traverse ensuite l'échangeur thermique 4 et cède de la chaleur au flux d'air 1, ce qui permet de chauffer l'habitacle 2. La quantité de chaleur apportée au flux d'air 1 est donnée par la différence d'enthalpie entre le point D, entrée de l'échangeur 4, et la point E, sortie de l'échangeur 4. Le fluide réfrigérant est ensuite détendu jusqu'à une pression P0 dite basse pression, au niveau du deuxième détendeur 24. Le fluide réfrigérant à basse pression traverse ensuite l'échangeur thermique 25 situé par exemple en face avant du véhicule et y reçoit de la chaleur du flux d'air extérieur 30, ce qui provoque l'évaporation du fluide réfrigérant. Le point F représente l'état du fluide réfrigérant en entrée de l'échangeur 25. Le fluide réfrigérant vaporisé regagne le compresseur 6 et boucle le cycle thermodynamique.

Dans ce mode de chauffage, le flux d'air 1 est chauffé d'une part par l'échangeur de chauffage 9, dans lequel circule le fluide caloporteur, et d'autre part par l'échangeur thermique 4, dans lequel circule le fluide réfrigérant à pression intermédiaire. Cette méthode est décrite en détail dans le brevet EP 2933586 B1. Dans ce mode de fonctionnement, l'essentiel de l'énergie chauffant l'habitacle est fournie par l'air extérieur au véhicule, qui fournit la chaleur nécessaire à vaporiser le fluide réfrigérant à basse pression, soit le segment entre les points F et A sur la figure 3. Ce mode de chauffage est donc particulièrement intéressant pour assurer le chauffage de l'habitacle d'un véhicule électrique puisqu'il permet de minimiser la puissance électrique nécessaire au chauffage du véhicule.

Le circuit de conditionnement thermique 100 peut également fonctionner en mode de refroidissement de l'habitacle 2.

Dans ce mode, le fluide réfrigérant comprimé passe dans l'échangeur bifluide 22. Le fluide réfrigérant cède de la chaleur au fluide caloporteur. Le fluide réfrigérant est ensuite détendu au niveau du premier détendeur 23 avant de traverser l'échangeur thermique 4. Le fluide réfrigérant absorbe de la chaleur de flux d'air 1, ce qui permet de refroidir l'habitacle 2. Le fluide réfrigérant traverse ensuite l'échangeur thermique 25 situé en face avant et regagne le compresseur 6. Le fluide caloporteur est lui refroidi dans l'échangeur de refroidissement 28 situé en face avant.

Lors du refroidissement du flux d'air 1, l'humidité présente dans l'air a tendance à se condenser. En effet, la température des parois de l'échangeur 4, avec lesquelles le flux d'air 1 réalise un échange thermique, peut être inférieure à la température de rosée du flux d'air 1. Autrement dit, lorsque l'échangeur thermique 4 effectue un refroidissement du flux d'air 1, des gouttelettes d'eau se forment et s'accumulent progressivement sur la surface extérieure 5 des parois de l'échangeur 4 ainsi qu'au voisinage des parois. La couche d'eau condensée sur l'extérieur de l'échangeur 4 pouvant avoir une épaisseur non nulle, on considère qu'il existe une région en contact avec la surface extérieure de l'échangeur 4, et dans laquelle de l'eau sous forme liquide peut se trouver. La figure 2 détaille un exemple de l'échangeur thermique 4. L'échangeur 4 comporte une série d'ailettes 17 entre lesquelles le flux d'air 1 peut passer et ainsi échanger de la chaleur avec le fluide réfrigérant parcourant l'échangeur 4. Le flux d'air 1 s'écoule selon une direction sensiblement perpendiculaire au plan de l'échangeur 4.

Si le circuit de conditionnement thermique 100 passe en mode chauffage alors que de l'eau sous forme liquide est présente dans la région en contact avec la surface extérieure 5 de l'échangeur thermique 4, cette eau a tendance à se vaporiser et à être entrainée par le flux d'air 1 destiné à l'habitacle 2. Dans le cas où les vitres du véhicule sont froides, la vapeur d'eau entrainée par le flux d'air 1 va se condenser et créer de la buée sur les vitres. Lorsque la quantité d'eau importante est présente sur l'échangeur 4, cette buée peut perturber sérieusement la visibilité et devenir un danger pour la conduite. Cette situation doit donc être évitée. A cette fin, l'invention présente propose une gestion particulière des transitions entre les modes de fonctionnement afin d'éviter la création de buée, en particulier sur le pare-brise.

Pour cela, le procédé proposé évalue le degré d'humidité de l'échangeur thermique 4 et n'autorise le passage dans le mode chauffage de cet échangeur que si ce degré d'humidité est suffisamment faible. Dans le cas où le degré d'humidité évalué est considéré trop élevé, le passage dans le mode chauffage est retardé. Un chauffage additionnel peut être utilisé pendant cette période où le mode chauffage n'est pas activé, afin de chauffer quand même le flux d'air 1.

Le degré d'humidité de l'échangeur 4 est estimé en continu en fonction des conditions de fonctionnement de l'échangeur 4. Lorsque l'échangeur 4 fonctionne en mode refroidissement, le degré d'humidité augmente. Lorsque l'échangeur 4 fonctionne en mode chauffage, le degré d'humidité diminue. Suivant les capteurs disponibles, divers paramètres peuvent être pris en compte pour estimer les variations du degré d'humidité. Dans la modélisation la plus simple, seule la durée de fonctionnement dans chacun des modes de fonctionnement est prise en compte. Il est possible de prendre également en compte la température de l'air ambiant, ainsi que son humidité. De plus, il est possible de prendre aussi en compte le débit d'air en contact avec l'échangeur thermique 4, ainsi que la température de l'air soufflé par l'échangeur 4. Le degré d'humidité évalué est mémorisé à la mise hors fonctionnement du véhicule. A la remise en fonctionnement du véhicule, la durée pendant laquelle le véhicule est resté hors fonctionnement est calculée. Si cette durée est suffisamment longue, le procédé considère que l'humidité présente sur l'échangeur 4 a eu le temps de s'évaporer et que l'échangeur 4 est sec. La valeur mémorisée du degré d'humidité n'est alors pas prise en compte. Si l'arrêt dure moins longtemps que cette durée limite, le procédé considère que de l'eau est toujours présente sur l'échangeur 4 et utilise la valeur mémorisée du degré d'humidité pour gérer l'activation du mode chauffage.

L'invention propose ainsi un procédé de contrôle d'un circuit de conditionnement thermique 100 d'un flux d'air 1, notamment destiné à un habitacle 2 d'un véhicule automobile,
le circuit comprenant un échangeur thermique 4 configuré pour être parcouru par un fluide réfrigérant et échanger de la chaleur avec le flux d'air 1, l'échangeur thermique 4 étant configuré pour fonctionner sélectivement au moins selon :
   - un mode dit refroidissement dans lequel le flux d'air 1 est refroidi,
   - un mode dit chauffage dans lequel le flux d'air 1 est chauffé,
le procédé comportant les étapes :
   - Evaluer un degré d'humidité H dans une région en contact avec une surface extérieure 5 de l'échangeur thermique 4, (étape 60)
   - Détecter une consigne de passage du mode refroidissement au mode chauffage, (étape 61)
   - Si le degré d'humidité évalué H est inférieur à un premier seuil prédéterminé s1, autoriser la circulation de fluide réfrigérant dans l'échangeur thermique 4 en réponse à la consigne de passage en mode chauffage, (étape 62)
   - Si le degré d'humidité évalué H est supérieur à un deuxième seuil prédéterminé s2, interdire la circulation du fluide réfrigérant dans l'échangeur thermique 4 pendant une première durée prédéterminée D1 de façon à retarder le passage en mode chauffage. (étape 63)

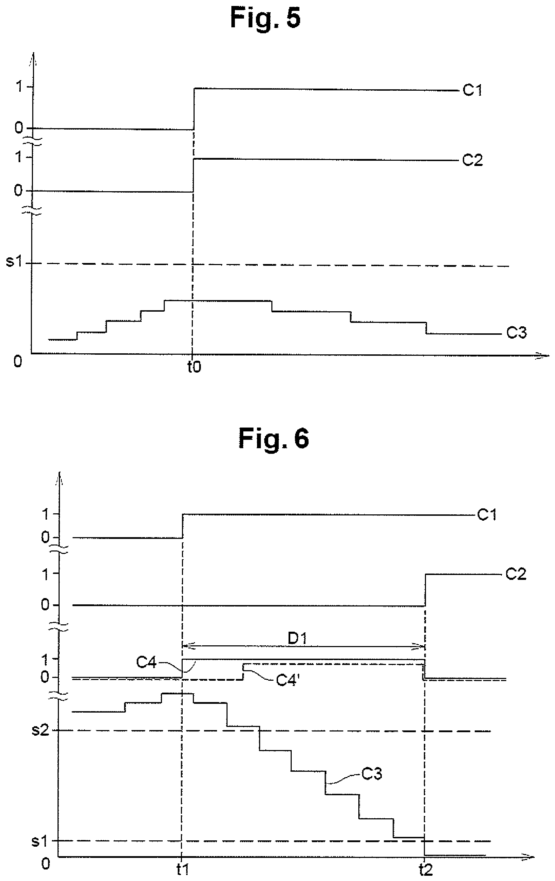

La figure 5 illustre cette étape. La courbe C1 illustre l'évolution temporelle de la consigne de mode de fonctionnement. Le niveau 1 indique une consigne de fonctionnement en mode chauffage, le niveau 0 indique une consigne de fonctionnement en mode refroidissement. La courbe C2 illustre l'évolution temporelle de l'autorisation de passage en mode chauffage de l'échangeur 4. Le niveau 1 indique que le mode chauffage de l'échangeur 4 est autorisé. La courbe C3 illustre l'évolution du degré d'humidité H de l'échangeur 4. Sur les figures 5 à 10, le symbole en double vague sur l'axe des ordonnées indique que les différences courbes ont des origines distinctes, dans le but d'écarter les courbes pour améliorer la lisibilité.

Lorsque le degré d'humidité H évalué sur l'échangeur thermique 4 est suffisamment faible pour ne pas risquer la formation de buée, le passage en mode chauffage de l'échangeur thermique est autorisé dès la réception de la consigne. C'est le cas de la figure 5 : le degré d'humidité évalué H est inférieur au seuil s1, le passage en mode chauffage est donc autorisé dès l'instant t0 correspondant à la réception de la consigne. Autrement dit, le passage en mode chauffage est réalisé en réponse à la consigne de passage en mode chauffage.

Dans le cas où le degré d'humidité évalué H est trop élevé, c'est-à-dire que la région en contact avec la surface extérieure 5 de l'échangeur thermique 4 comprend une quantité d'eau trop importante, le passage en mode chauffage est retardé par rapport à la réception de la consigne de passage en mode chauffage. Autrement dit, la consigne de passage en mode chauffage n'est pas appliquée immédiatement, mais après une temporisation. Le retard ainsi introduit peut être utilisé pour réduire le degré d'humidité de l'échangeur thermique et obtenir des conditions dans lesquelles le passage en mode chauffage ne posera pas de problème.

La figure 6 illustre ce cas. Les courbes C1, C2, C3 illustrent les mêmes paramètres que sur la figure 5, à un moment différent. Sur cette figure, le degré d'humidité évalué H est supérieur au seuil s2 au moment où la consigne de passage en mode chauffage est reçue. Le passage effectif en mode chauffage s'effectue à l'instant t2, c'est-à-dire avec un retard d'une durée D1 par rapport à la réception de la consigne de passage en mode chauffage, qui elle se produit à l'instant t1.

Selon un mode de réalisation, le procédé de contrôle comporte l'étape :
- Si le degré d'humidité évalué H est compris entre le premier seuil prédéterminé s1 et le deuxième seuil prédéterminé s2, interdire le passage du fluide réfrigérant dans l'échangeur thermique 4 pendant une deuxième durée prédéterminée D2 de façon à retarder le passage en mode chauffage. (étape 64)

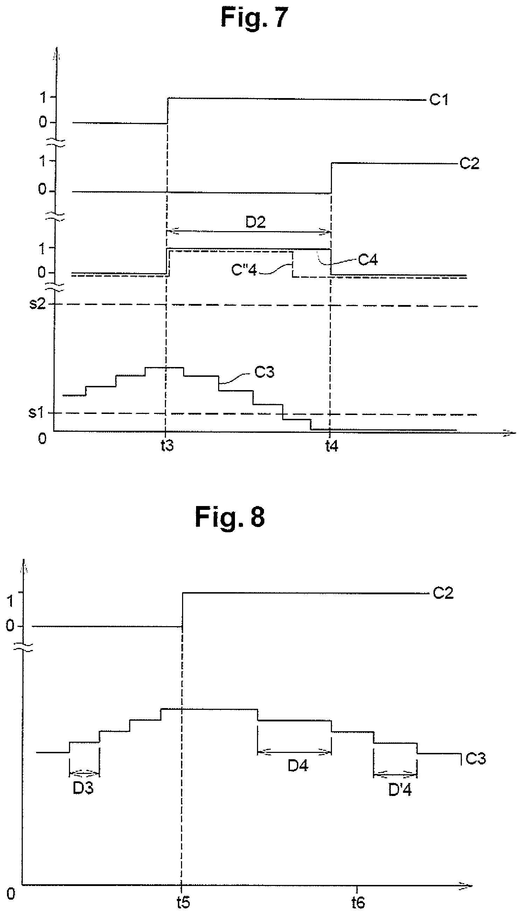

La figure 7 illustre cette étape. Lorsque le degré d'humidité estimé est compris entre les deux seuils prédéterminés s1 et s2, le passage en mode chauffage est retardé d'une durée D2, qui est plus faible que la durée D1. La consigne de passage en mode chauffage est ici reçue à l'instant t3, et le passage en mode chauffage s'effectue à l'instant t4.

Selon un mode de réalisation, l'interdiction de la circulation du fluide réfrigérant dans l'échangeur thermique 4 est obtenue en maintenant le dispositif de compression 6 à l'arrêt. On entend par « à l'arrêt » que le moteur électrique entrainant les organes mécaniques assurant la compression du fluide réfrigérant n'est pas commandé, c'est-à-dire qu'il ne reçoit pas de puissance électrique. Le dispositif de compression 6 n'augmente pas la pression dans le circuit de fluide réfrigérant 20, et il est considéré qu'il n'y a alors pas de circulation de fluide réfrigérant dans l'échangeur thermique.

Selon un autre mode de réalisation, l'interdiction de la circulation du fluide réfrigérant dans l'échangeur thermique 4 est obtenue en ouvrant une branche de contournement 7 permettant au fluide réfrigérant de contourner l'échangeur thermique 4.

Dans ce cas, le fluide réfrigérant peut circuler dans le circuit de fluide réfrigérant 20, sauf dans l'échangeur 4. Le fluide réfrigérant passe alors dans la branche de contournement 7 plutôt que dans l'échangeur thermique 4. La branche de contournement 7 comporte une vanne d'arrêt 8 configurée pour empêcher la circulation de fluide dans la branche de contournement 7.

Lorsque la puissance de refroidissement maximale est recherchée, la vanne d'arrêt 8 permet d'empêcher le fluide réfrigérant de contourner l'échangeur thermique 4, ce qui oblige l'intégralité du fluide réfrigérant à traverser l'échangeur 4. La branche de contournement 7 et la vanne d'arrêt 8 sont représentées sur la figure 1.

Selon un exemple de mise en œuvre du procédé, la première durée prédéterminée D1 d'interdiction de circulation du fluide réfrigérant dans l'échangeur thermique 4 est comprise entre 8 et 12 minutes. La première durée prédéterminée D1 est de préférence comprise entre 9 et 11 minutes.

Ces plages de valeurs permettent d'assurer un fonctionnement sans formation de buée lorsque l'échangeur thermique passe en mode chauffage alors qu'un degré d'humidité élevé a été évalué.

Selon un exemple de mise en œuvre du procédé, la deuxième durée prédéterminée D2 d'interdiction de circulation du fluide réfrigérant dans l'échangeur thermique 4 est comprise entre 3 et 5 minutes. La deuxième durée prédéterminée D2 est de préférence égale à 4 minutes.

Comme précédemment, ces plages de valeurs permettent d'assurer un fonctionnement sans formation de buée lorsque l'échangeur thermique passe en mode chauffage, dans le cas où un degré d'humidité intermédiaire a été évalué. Les valeurs peuvent être adaptées suivant le véhicule sur lequel le procédé est mis en œuvre.

Selon une implémentation possible du procédé, le degré d'humidité évalué H sur l'échangeur thermique 4 est évalué sur une échelle discrète comportant deux niveaux. Une échelle à deux niveaux permet de différencier un état « sec » et un état « mouillé » de l'échangeur thermique. Cette solution est simple à mettre en œuvre car elle utilise peu de mémoire et de puissance de calcul de l'unité de contrôle électronique 16.

Selon une autre implémentation possible du procédé, le degré d'humidité évalué H sur l'échangeur thermique 4 est évalué sur une échelle discrète comportant trois niveaux. Cette échelle à trois niveaux permet de prendre en compte un état « sec » de l'échangeur thermique 4, un état « partiellement mouillé » et un état « complètement mouillé » de l'échangeur thermique 4.

Selon une autre variante de mise en œuvre du procédé, le degré d'humidité évalué H sur l'échangeur thermique 4 est évalué sur une échelle discrète comportant N niveaux, N étant un nombre entier strictement supérieur à 3. Une échelle à N niveaux, avec N strictement supérieur à trois, permet de différencier un état « sec », un état « complètement mouillé », et plusieurs états « partiellement mouillé » caractérisant des degrés croissants d'humidité de l'échangeur thermique. Une telle variante peut permettre une modélisation plus fine des phénomènes de condensation et d'évaporation de l'eau sur l'échangeur thermique mais est plus complexe à mettre en œuvre. Les figures 5 à 9 correspondent à ce type d'échelle, qui permet de mieux visualiser l'évolution temporelle du degré d'humidité évalué.

Afin d'assurer néanmoins un chauffage du flux d'air 1 pendant la phase où le chauffage par l'échangeur 4 n'est pas autorisé, il est possible de faire appel à un chauffage additionnel 10.

Pour cela, le circuit comporte un dispositif de chauffage additionnel 10 configuré pour chauffer le flux d'air 1, le procédé comportant l'étape :
- Pendant l'étape d'interdiction de passage du réfrigérant dans l'échangeur thermique 4, activer le dispositif de chauffage additionnel 10 afin de chauffer le flux air 1. (étape 65)

Le dispositif de chauffage additionnel 10 peut être activé à la place du chauffage par l'échangeur 4, et permet d'assurer la puissance de chauffage souhaitée.

Le dispositif de chauffage additionnel 10 est disposé, selon le sens de circulation du flux d'air 1, en aval de l'échangeur thermique 4.

Cette disposition permet d'éviter que le flux d'air destiné à l'habitacle du véhicule se charge de l'humidité contenue sur la surface de l'échangeur thermique.

Sur l'exemple de la figure 1, le dispositif de chauffage additionnel 10 comprend une résistance électrique 11 configurée pour chauffer un fluide caloporteur circulant dans un échangeur thermique échangeant de la chaleur avec le flux d'air 1.

La chaleur fournie au fluide caloporteur par la résistance électrique 11 vient s'ajouter à la chaleur fournie au fluide caloporteur au niveau de l'échangeur bifluide 22 par le fluide réfrigérant à haute pression. Bien que l'échangeur 4 ne soit alors pas utilisé en mode chauffage, la puissance de chauffage globale peut être assurée. Le procédé selon l'invention permet de minimiser les phases de fonctionnement pendant lesquelles le chauffage additionnel 10 est utilisé. En effet, en l'absence de modélisation du degré d'humidité de la région proche de la surface de l'échangeur 4, tous les passages en mode chauffage devraient s'effectuer en faisant appel uniquement au chauffage additionnel 10 pour ne pas risquer la formation de buée sur le pare-brise du véhicule.

Selon un exemple de mise en œuvre du procédé, le dispositif de chauffage additionnel 10 est activé pendant toute la durée de l'étape d'interdiction de passage du réfrigérant dans l'échangeur thermique 4. C'est le cas de figure illustré par la courbe C4 sur les figures 6 et 7. Lorsque la courbe C4 est à l'état 0, le chauffage additionnel 10 n'est pas activé. Lorsque la courbe C4 est à l'état 1, le chauffage additionnel 10 est activé.

Selon un autre exemple de mise en œuvre du procédé, le dispositif de chauffage additionnel 10 est activé pendant une partie de la durée de l'étape d'interdiction de passage du réfrigérant dans l'échangeur thermique 4. C'est le cas de figure illustré par la courbe C'4 sur la figure 6 et C"4 sur la figure 7. Sur la courbe C"4, la commande du chauffage additionnel cesse avant la fin de la durée D2. Sur la courbe C'4, la commande du chauffage additionnel commence après l'instant t1. Il est bien sur possible de prévoir d'autres modes de commande du chauffage additionnel, comme une commande commençant après l'instant t1 et se terminant avant l'instant t2. De même, une commande intermittente pendant la durée D1 ou D2 est également possible.

Le procédé de contrôle peut comporter l'étape :
- Pendant l'étape d'activation du dispositif de chauffage additionnel, assurer une valeur minimale au débit du flux d'air en contact thermique avec l'échangeur thermique.

Ce débit d'air minimal traversant l'échangeur thermique permet d'assécher celui-ci. Le débit minimal est choisi pour ne pas être perceptible par l'utilisateur lorsque celui çi a choisi de ne pas activer l'installation de conditionnement d'air de son véhicule. Le débit d'air est aussi choisi de façon à ce que l'évaporation soit suffisamment lente pour ne pas saturer d'humidité l'air traversant l'échangeur, de façon à ne pas risquer la formation de buée sur les vitres du véhicule.

Le procédé de contrôle peut comporter l'étape :
- Pendant l'étape d'activation du dispositif de chauffage additionnel 10, augmenter le débit du flux d'air 1 en contact thermique avec l'échangeur thermique 4.

Cette étape d"augmentation du débit d'air en contact avec l'échangeur thermique 4 permet d'accélérer l'évaporation de l'eau de la surface de l'échangeur thermique 4. Cette évaporation est cependant suffisamment lente pour qu'il n'y ait pas de risque de formation de buée, le taux d'humidité dans l'air échangeant thermiquement avec l'échangeur 4 restant inférieur au taux entrainant la saturation et la création de gouttelettes.

L'augmentation du débit du flux d'air 1 est obtenue par augmentation d'un régime de rotation d'un groupe moto-ventilateur 18. Le groupe moto-ventilateur 18 est, de manière bien connue, disposé dans l'installation de chauffage, ventilation et conditionnement d'air et contribue à acheminer le flux d'air 1 vers l'habitacle 2.

On détaillera maintenant les étapes du procédé permettant d'estimer en continu le degré d'humidité de l'échangeur thermique 4. Les phases de fonctionnement menant à une condensation de la vapeur d'eau sur l'échangeur sont différenciées des phases de fonctionnement menant à une évaporation de l'eau déjà présente sur l'échangeur 4.

Pour cela, le procédé de contrôle comporte l'étape :
- Déterminer une durée pendant laquelle l'échangeur thermique 4 fonctionne en mode refroidissement,
- Si la durée de fonctionnement en mode refroidissement est supérieure à une troisième durée prédéterminée D3, incrémenter le degré d'humidité évalué H sur l'échangeur thermique 4. (étape 66)

L'incrémentation consiste à augmenter de 1 le degré d'humidité évalué H, sur l'échelle d'évaluation utilisée.

Le mode « refroidissement » de l'échangeur thermique peut correspondre à plusieurs modes de fonctionnement distincts du circuit de conditionnement thermique 100. En effet, le mode « climatisation » et le mode « déshumidification » de l'air de l'habitacle du véhicule font tous les deux fonctionner l'échangeur thermique 4 en mode « refroidissement ». En mode déshumidification, l'échangeur 4 refroidit le flux d'air 1, avant que celui-ci soit réchauffé à nouveau par l'échangeur 9. Ainsi, un refroidissement au niveau de l'échangeur 4 est possible même lorsque globalement une augmentation de la température du flux d'air 1 est obtenue.

Selon un exemple de mise en œuvre du procédé, la troisième durée prédéterminée D3 après laquelle le degré d'humidité évalué H sur l'échangeur thermique 4 est incrémenté est une valeur constante. Cette valeur est mémorisée dans une mémoire permanente de l'unité de contrôle 16.

Selon un autre exemple de mise en œuvre du procédé, la troisième durée prédéterminée D3 après laquelle le degré d'humidité évalué H sur l'échangeur thermique 4 est incrémenté est déterminée en fonction d'une valeur d'un débit d'air en contact avec l'échangeur thermique 4. Le débit d'air peut être par exemple estimé à partir d'une valeur du régime de rotation du groupe moto-ventilateur 18, qui peut être mesuré ou encore estimé à partir des consignes du conducteur.

En variante ou de manière complémentaire, la troisième durée prédéterminée D3 après laquelle le degré d'humidité évalué H sur l'échangeur thermique 4 est incrémenté est déterminée en fonction d'une valeur de la température ambiante.

En variante ou de manière complémentaire, la troisième durée prédéterminée D3 après laquelle le degré d'humidité évalué H sur l'échangeur thermique 4 est incrémenté est déterminée en fonction d'un taux d'humidité ambiante.

En variante ou de manière complémentaire, la troisième durée prédéterminée D3 après laquelle le degré d'humidité évalué H sur l'échangeur thermique 4 est incrémentée est déterminée en fonction d'une valeur de la température du flux d'air 1 en aval de l'échangeur thermique 4.

Les paramètres physiques listés précédemment interviennent tous dans le phénomène de condensation de la vapeur d'eau présente dans l'air échangeant thermiquement avec l'échangeur 4. Leur prise en compte permet d'améliorer la précision de la modélisation. Le procédé peut utiliser seulement une partie de ces paramètres, lorsque pour des raisons de cout certains capteurs ne sont pas présents.

Un principe similaire est appliqué pour estimer l'évaporation de l'eau liquide présente dans la région proche de la surface de l'échangeur 4, qui fait diminuer le degré d'humidité de l'échangeur 4.

Pour cela, le procédé de contrôle comporte l'étape :
- Déterminer une durée pendant laquelle l'échangeur thermique 4 fonctionne dans un mode différent du mode refroidissement,
- Si la durée de fonctionnement dans un mode différent du mode refroidissement est supérieure à une quatrième durée prédéterminée D4, décrémenter le degré d'humidité évalué H sur l'échangeur thermique 4. (étape 67)

La décrémentation proposée consiste à diminuer de 1 le degré d'humidité évalué H, sur l'échelle d'évaluation utilisée.

On entend, par mode différent du mode « refroidissement », le mode « chauffage » et le mode « inactif ». Dans le mode « chauffage », l'échangeur thermique échange de la chaleur avec l'air au contact de sa surface afin de chauffer l'air. Dans le mode « inactif », l'échangeur n'échange pas de chaleur avec l'air au contact de sa surface. Ce mode peut par exemple être déclenché par le conducteur du véhicule lorsqu'il ne souhaite pas utiliser le circuit de climatisation du véhicule.

En variante ou de manière complémentaire, la quatrième durée prédéterminée D4 après laquelle le degré d'humidité évalué H sur l'échangeur thermique 4 est décrémenté est déterminée en fonction d'une valeur d'un débit d'air en contact avec l'échangeur thermique 4.

En variante ou de manière complémentaire, la quatrième durée prédéterminée D4 après laquelle le degré d'humidité évalué H sur l'échangeur thermique 4 est décrémenté est déterminée en fonction d'une valeur de la température ambiante.

En variante ou de manière complémentaire, la quatrième durée prédéterminée D4 après laquelle le degré d'humidité évalué H sur l'échangeur thermique 4 est décrémenté est déterminée en fonction d'un taux d'humidité ambiante.

En variante ou de manière complémentaire, la quatrième durée prédéterminée D4 après laquelle le degré d'humidité évalué H sur l'échangeur thermique 4 est décrémenté est déterminée en fonction d'une valeur de la température du flux d'air 1 en amont de l'échangeur thermique 4.

Comme précédemment, la prise en compte des différentes grandeurs physiques intervenant dans le phénomène d'évaporation des gouttelettes d'eau présentes sur la surface de l'échangeur 4 permet d'améliorer la précision du procédé.

La figure 8 détaille ces phases de fonctionnement. Jusqu'au temps t5, l'échangeur 4 fonctionne en mode refroidissement. Le degré d'humidité évalué H, courbe C5, est donc incrémenté après chaque intervalle de temps égal à D3. A partir de l'instant t5, l'échangeur 4 fonctionne en mode chauffage. Le degré d'humidité évalué H est donc décrémenté après chaque intervalle de temps égal à D4. A partir de l'instant t6, la durée entre deux décrémentations change et est égale à D'4.

Dans cet exemple de mise en œuvre, la valeur du décrément est constante, égale à 1, et la durée D4 après laquelle la décrémentation du degré d'humidité évalué H est effectuée est variable. Il serait bien sur possible d'arriver au même comportement du procédé en utilisant un décrément variable et une durée fixe. Il en est de même pour l'étape d'incrémentation du degré d'humidité évalué H : il est possible d'utiliser un incrément variable et une durée D3 fixe.

Les étapes qui viennent d'être décrites permettent d'évaluer en continu le degré d'humidité de l'échangeur 4 lors des phases d'utilisation du véhicule. Des étapes spécifiques sont prévues pour prendre en compte les phases pendant lesquelles le véhicule n'est pas utilisé. Ces phases correspondent aux moments pendant lesquels l'installation de climatisation n'est pas activée et le véhicule n'est pas en mouvement, comme pendant un stationnement. On entend par « mise hors fonctionnement du véhicule » le moment où la consommation électrique de l'unité électronique 16 devient nulle. On entend par ce terme que le courant électrique consommé par l'unité électronique 16 est égale au maximum au courant de fuite lié à la connexion de l'unité électronique 16 à une source électrique du véhicule.

Ainsi, le procédé de contrôle comporte l'étape :
- A la mise hors fonctionnement du véhicule, mémoriser le degré d'humidité évalué H sur l'échangeur thermique 4.

Le procédé de contrôle comporte l'étape :
- A la mise hors fonctionnement du véhicule, écrire le degré d'humidité évalué H sur l'échangeur thermique 4 dans une mémoire permanente 15 d'une unité électronique de contrôle 16.

La valeur mémorisée peut ainsi être relue lorsque le véhicule est remis en fonctionnement après une période d'inactivité.

Le procédé de contrôle comprend l'étape :
- A la mise en fonctionnement du véhicule, déterminer le degré d'humidité évalué H mémorisé à la mise hors fonctionnement du véhicule.

Le procédé de contrôle comprend l'étape :
- A la mise en fonctionnement du véhicule, déterminer une durée d'arrêt du véhicule.

Le procédé de contrôle comporte l'étape :
- Si la durée d'arrêt est supérieure à une durée d'arrêt prédéterminée Doff, attribuer une valeur nulle au degré d'humidité évalué H sur l'échangeur thermique 4.

En cas d'arrêt suffisamment long, il est considéré que toute l'eau qui était présente sur l'échangeur de chaleur lors de l'arrêt du véhicule a eu le temps de s'évaporer pendant que le véhicule était arrêté. L'échangeur thermique est ainsi sec.

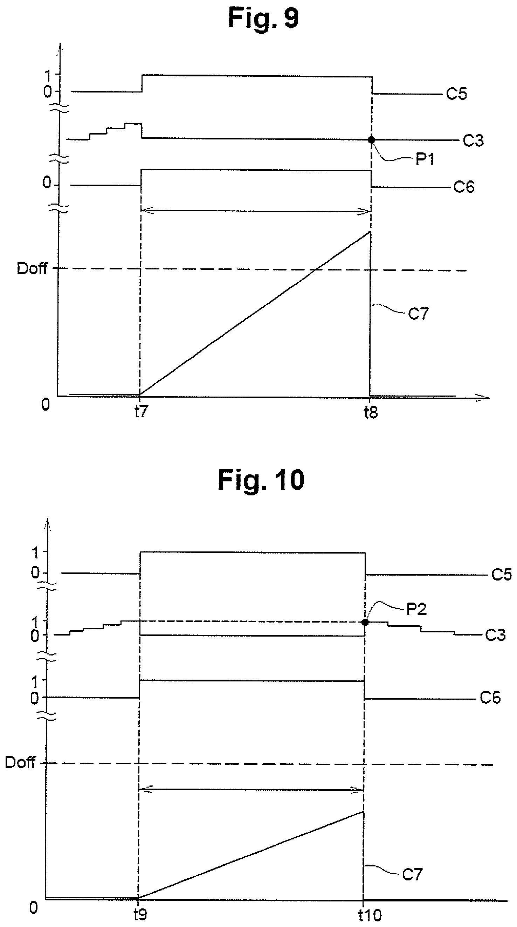

La figure 9 illustre ces étapes. La courbe C5 schématise l'état de fonctionnement du véhicule. La courbe C3 schématise le degré d'humidité H évalué. A l'instant t7, le véhicule passe dans l'état hors fonctionnement, qui dure jusqu'à l'instant t8. La courbe C7 illustre la durée de la phase « hors fonctionnement ». La courbe C6 illustre la valeur du degré d'humidité mémorisée. A l'instant t7, la valeur courante de la courbe C3 est mémorisée. A l'instant t8, le véhicule recommence à fonctionner. La durée de l'arrêt est supérieure à la durée seuil Doff, la valeur avec laquelle le degré d'humidité est réinitialisé à l'instant t8 est donc la valeur nulle. (Point P1)

Le procédé de contrôle comporte l'étape :
- Si la durée d'arrêt est inférieure ou égale à une durée d'arrêt prédéterminée Doff, attribuer la valeur mémorisée au degré d'humidité évalué H sur l'échangeur thermique 4.

Lorsque l'arrêt du véhicule n'est pas suffisamment long, il est considéré que la quantité d'eau présente sur l'échangeur thermique est la même que celle évaluée lors de l'arrêt du véhicule.

La figure 10 illustre ce cas. La courbe C5 schématise l'état de fonctionnement du véhicule. La courbe C3 schématise le degré d'humidité H évalué. A l'instant t9, le véhicule passe dans l'état hors fonctionnement, qui dure jusqu'à l'instant t10. La courbe C7 illustre la durée de la phase « hors fonctionnement ». La courbe C6 illustre la valeur du degré d'humidité mémorisée. A l'instant t9, la valeur courante de la courbe C5 est mémorisée. A l'instant t10, le véhicule recommence à fonctionner. La durée de l'arrêt est inférieure à la durée seuil Doff, la valeur avec laquelle le degré d'humidité est réinitialisé est donc la valeur qui avait été mémorisée à la mise hors fonctionnement du véhicule. (Point P2)

Selon un mode de réalisation, la durée d'arrêt prédéterminée Doff est une valeur constante.

Selon un autre mode de réalisation, la durée d'arrêt prédéterminée Doff est déterminée en fonction du degré d'humidité évalué H mémorisé à la mise hors fonctionnement du véhicule.

Il est ainsi possible de moduler la durée d'arrêt du véhicule permettant de considérer que toute l'eau présente sur l'échangeur thermique lors de l'arrêt du véhicule a disparu pendant cet arrêt du véhicule. Plus le degré d'humidité évalué est élevé, plus la durée d'arrêt permettant de considérer que toute l'eau s'est évaporée est longue.

Le circuit de conditionnement thermique 100 est configuré pour mettre en œuvre toutes les étapes et caractéristiques du procédé décrit précédemment.

Selon des modes de réalisation non représentés, le procédé de contrôle, ainsi que le circuit de conditionnement thermique mettant en œuvre le procédé peuvent également comprendre une ou plusieurs des caractéristiques ci-dessous, considérées individuellement ou combinées entre elles :
- le dispositif de chauffage additionnel 10 peut comporter une résistance électrique configurée pour échanger de la chaleur avec le flux d'air 1.

Dans ce cas, la résistance électrique chauffant le fluide caloporteur n'est pas présente. Une résistance électrique chauffant directement le flux d'air 1, plutôt que le fluide caloporteur, permet d'assurer une puissance thermique élevée et présente une faible inertie thermique.
- le dispositif de chauffage additionnel 10 peut comprendre un bruleur configuré pour bruler un combustible.

Bien entendu, d'autres modifications et variations se suggèrent d'elles même à l'homme du métier, après réflexion sur les différents modes de réalisation illustrés. L'invention n'est nullement limitée aux modes de réalisation décrits et illustrés dans cette demande, qui sont donnés à titre d'exemples et ne sont pas destinés à limiter la portée de l'invention.

En particulier, le principe général décrit ici pourrait aussi être appliqué dans une architecture où le chauffage de l'air se fait sans circuit de fluide caloporteur mais de façon directe avec un condenseur interne. Le fluide réfrigérant échange alors de la chaleur directement avec le flux d'air destiné à l'habitacle.

## Revendications

1. Procédé de contrôle d'un circuit de conditionnement thermique (100) d'un flux d'air (1), notamment destiné à un habitacle (2) d'un véhicule automobile,
le circuit comprenant un échangeur thermique (4) configuré pour être parcouru par un fluide réfrigérant et échanger de la chaleur avec le flux d'air (1), l'échangeur thermique (4) étant configuré pour fonctionner sélectivement au moins selon :
- un mode dit refroidissement dans lequel le flux d'air (1) est refroidi,
- un mode dit chauffage dans lequel le flux d'air (1) est chauffé, **caractérisé en ce que** le procédé comporte les étapes :
- Evaluer un degré d'humidité (H) dans une région en contact avec une surface extérieure (5) de l'échangeur thermique (4), (étape 60)
- Détecter une consigne de passage du mode refroidissement au mode chauffage, (étape 61)
- Si le degré d'humidité évalué (H) est inférieur à un premier seuil prédéterminé (s1), autoriser la circulation de fluide réfrigérant dans l'échangeur thermique (4) en réponse à la consigne de passage en mode chauffage, (étape 62)
- Si le degré d'humidité évalué (H) est supérieur à un deuxième seuil prédéterminé (s2), interdire la circulation du fluide réfrigérant dans l'échangeur thermique (4) pendant une première durée prédéterminée (D1) de façon à retarder le passage en mode chauffage. (étape 63), le deuxième seuil (s2) étant supérieur ou égal au premier seuil (s1).

2. Procédé de contrôle selon la revendication précédente, comportant l'étape :
Si le degré d'humidité évalué (H) est compris entre le premier seuil prédéterminé (s1) et le deuxième seuil prédéterminé (s2), interdire le passage du fluide réfrigérant dans l'échangeur thermique (4) pendant une deuxième durée prédéterminée (D2) de façon à retarder le passage en mode chauffage. (étape 64)

3. Procédé de contrôle selon la revendication 1 ou 2, dans lequel le circuit de conditionnement thermique (100) comprend un dispositif de compression (6) configuré pour augmenter la pression du fluide réfrigérant, et dans lequel l'interdiction de la circulation du fluide réfrigérant dans l'échangeur thermique (4) est obtenue en maintenant le dispositif de compression (6) à l'arrêt.

4. Procédé de contrôle selon la revendication 1 ou 2, dans lequel l'interdiction de la circulation du fluide réfrigérant dans l'échangeur thermique (4) est obtenue en ouvrant une branche de contournement (7) permettant au fluide réfrigérant de contourner l'échangeur thermique (4).

5. Procédé de contrôle selon l'une des revendications précédentes, dans lequel le circuit comporte un dispositif de chauffage additionnel (10) configuré pour chauffer le flux d'air (1), le procédé comportant l'étape :
- Pendant l'étape d'interdiction de passage du réfrigérant dans l'échangeur thermique (4), activer le dispositif de chauffage additionnel (10) afin de chauffer le flux air (1). (étape 65)

6. Procédé de contrôle selon la revendication précédente, comportant l'étape :
- Pendant l'étape d'activation du dispositif de chauffage additionnel (10), assurer une valeur minimale au débit du flux d'air (1) en contact thermique avec l'échangeur thermique (4)

7. Procédé de contrôle selon l'une des revendications précédentes, comportant l'étape :
- Déterminer une durée pendant laquelle l'échangeur thermique (4) fonctionne en mode refroidissement,
- Si la durée de fonctionnement en mode refroidissement est supérieure à une troisième durée prédéterminée (D3), incrémenter le degré d'humidité évalué (H) sur l'échangeur thermique (4). (étape 66)

8. Procédé de contrôle selon l'une des revendications précédentes, comportant l'étape :
- Déterminer une durée pendant laquelle l'échangeur thermique (4) fonctionne dans un mode différent du mode refroidissement,
- Si la durée de fonctionnement dans un mode différent du mode refroidissement est supérieure à une quatrième durée prédéterminée (D4), décrémenter le degré d'humidité évalué (H) sur l'échangeur thermique (4). (étape 67)

9. Procédé de contrôle selon l'une des revendications précédentes, comportant l'étape :
- A la mise hors fonctionnement du véhicule, mémoriser le degré d'humidité évalué (H) sur l'échangeur thermique,
- A la mise en fonctionnement du véhicule, déterminer le degré d'humidité évalué (H) mémorisé à la mise hors fonctionnement du véhicule,
- A la mise en fonctionnement du véhicule, déterminer une durée d'arrêt du véhicule,
- Si la durée d'arrêt est supérieure à une durée d'arrêt prédéterminée (Doff), attribuer une valeur nulle au degré d'humidité évalué (H) sur l'échangeur thermique (4),
- Si la durée d'arrêt est inférieure ou égale à une durée d'arrêt prédéterminée (Doff), attribuer la valeur mémorisée au degré d'humidité évalué (H) sur l'échangeur thermique (4).

10. Circuit de conditionnement thermique (100) d'un flux d'air (1), notamment destiné à un habitacle (2) d'un véhicule automobile,
le circuit (100) comprenant un échangeur thermique (4) configuré pour être parcouru par un fluide réfrigérant et échanger de la chaleur avec le flux d'air (1), l'échangeur thermique (4) étant configuré pour fonctionner sélectivement au moins selon :
- un mode dit refroidissement dans lequel le flux d'air (1) est refroidi,
- un mode dit chauffage dans lequel le flux d'air (1) est chauffé,
le circuit de conditionnement thermique (100) étant **caractérisé en ce qu'**il est configuré pour :
- Evaluer un degré d'humidité dans une région en contact une surface extérieure (5) de l'échangeur thermique (4),
- Détecter une consigne de passage du mode refroidissement au mode chauffage,
- Si le degré d'humidité évalué (H) est inférieur à un premier seuil prédéterminé (s1), autoriser la circulation de fluide réfrigérant dans l'échangeur thermique (4) en réponse à la consigne de passage en mode chauffage,
- Si le degré d'humidité évalué (H) est supérieur à un deuxième seuil prédéterminé (s2), interdire la circulation du fluide réfrigérant dans l'échangeur thermique (4) pendant une première durée prédéterminée (D1) de façon à retarder le passage en mode chauffage, le deuxième seuil (s2) étant supérieur ou égal au premier seuil (s1).

## Patentansprüche

1. Verfahren zur Steuerung eines Wärmekonditionierungskreislaufs (100) eines Luftstroms (1), insbesondere für den Innenraum (2) eines Kraftfahrzeugs,
wobei der Kreislauf einen Wärmetauscher (4) umfasst, der dazu eingerichtet ist, von einem Kältemittel durchströmt zu werden und Wärme mit dem Luftstrom (1) auszutauschen,
wobei der Wärmetauscher (4) wahlweise zumindest in folgenden Betriebsarten arbeiten kann:
- einem sogenannten Kühlmodus, in dem der Luftstrom (1) gekühlt wird,
- einem sogenannten Heizmodus, in dem der Luftstrom (1) erwärmt wird,
**dadurch gekennzeichnet, dass** das Verfahren folgende Schritte umfasst:
- Ermittlung eines Feuchtigkeitsgrads (H) in einem Bereich, der mit einer Außenfläche (5) des Wärmetauschers (4) in Kontakt steht, (Schritt 60)
- Erkennung einer Anweisung zum Umschalten vom Kühlmodus in den Heizmodus, (Schritt 61)
- Falls der ermittelte Feuchtigkeitsgrad (H) unter einem ersten vorbestimmten Schwellenwert (s1) liegt, Freigabe der Zirkulation des Kältemittels im Wärmetauscher (4) als Reaktion auf die Umschaltanweisung in den Heizmodus, (Schritt 62)
- Falls der ermittelte Feuchtigkeitsgrad (H) über einem zweiten vorbestimmten Schwellenwert (s2) liegt, Verhinderung der Zirkulation des Kältemittels im Wärmetauscher (4) für eine erste vorbestimmte Dauer (D1), um den Übergang in den Heizmodus zu verzögern, (Schritt 63),
wobei der zweite Schwellenwert (s2) größer oder gleich dem ersten Schwellenwert (s1) ist.

2. Steuerungsverfahren nach Anspruch 1, umfassend den Schritt:
- Falls der ermittelte Feuchtigkeitsgrad (H) zwischen dem ersten vorbestimmten Schwellenwert (s1) und dem zweiten vorbestimmten Schwellenwert (s2) liegt, Verhinderung der Zirkulation des Kältemittels im Wärmetauscher (4) für eine zweite vorbestimmte Dauer (D2), um den Übergang in den Heizmodus zu verzögern. (Schritt 64)

3. Steuerungsverfahren nach Anspruch 1 oder 2, wobei der Wärmekonditionierungskreislauf (100) eine Verdichtereinrichtung (6) umfasst, die dazu eingerichtet ist, den Druck des Kältemittels zu erhöhen, und wobei die Verhinderung der Zirkulation des Kältemittels im Wärmetauscher (4) durch das Abschalten der Verdichtereinrichtung (6) erfolgt.

4. Steuerungsverfahren nach Anspruch 1 oder 2, wobei die Verhinderung der Zirkulation des Kältemittels im Wärmetauscher (4) durch Öffnen eines Bypasszweigs (7) erfolgt, der es dem Kältemittel ermöglicht, den Wärmetauscher (4) zu umgehen.

5. Steuerungsverfahren nach einem der vorhergehenden Ansprüche, wobei der Kreislauf eine zusätzliche Heizeinrichtung (10) umfasst, die dazu eingerichtet ist, den Luftstrom (1) zu erwärmen, und das Verfahren den Schritt umfasst:
- Während der Phase der Verhinderung der Zirkulation des Kältemittels im Wärmetauscher (4) wird die zusätzliche Heizeinrichtung (10) aktiviert, um den Luftstrom (1) zu erwärmen. (Schritt 65)

6. Steuerungsverfahren nach dem vorhergehenden Anspruch, umfassend den Schritt:
- Während der Aktivierung der zusätzlichen Heizeinrichtung (10) wird ein Mindestwert für die Strömungsgeschwindigkeit des mit dem Wärmetauscher (4) in thermischem Kontakt stehenden Luftstroms (1) sichergestellt.

7. Steuerungsverfahren nach einem der vorhergehenden Ansprüche, umfassend die Schritte:
- Bestimmung einer Zeitdauer, während der der Wärmetauscher (4) im Kühlmodus betrieben wird,
- Falls die Betriebsdauer im Kühlmodus größer als eine dritte vorbestimmte Dauer (D3) ist, Erhöhung des ermittelten Feuchtigkeitsgrads (H) am Wärmetauscher (4). (Schritt 66)

8. Steuerungsverfahren nach einem der vorhergehenden Ansprüche, umfassend die Schritte:
- Bestimmung einer Zeitdauer, während der der Wärmetauscher (4) in einem anderen Modus als dem Kühlmodus betrieben wird,
- Falls diese Betriebsdauer größer als eine vierte vorbestimmte Dauer (D4) ist, Verringerung des ermittelten Feuchtigkeitsgrads (H) am Wärmetauscher (4). (Schritt 67)

9. Steuerungsverfahren nach einem der vorhergehenden Ansprüche, umfassend die Schritte:
- Beim Ausschalten des Fahrzeugs wird der ermittelte Feuchtigkeitsgrad (H) am Wärmetauscher gespeichert,
- Beim Einschalten des Fahrzeugs wird der beim Ausschalten gespeicherte Feuchtigkeitsgrad (H) ermittelt,
- Beim Einschalten des Fahrzeugs wird eine Stillstandsdauer des Fahrzeugs bestimmt,
- Falls die Stillstandsdauer größer als eine vorbestimmte Dauer (Doff) ist, wird der ermittelte Feuchtigkeitsgrad (H) am Wärmetauscher (4) auf null gesetzt,
- Falls die Stillstandsdauer kleiner oder gleich der vorbestimmten Dauer (Doff) ist, wird der gespeicherte Wert dem ermittelten Feuchtigkeitsgrad (H) am Wärmetauscher (4) zugewiesen.

10. Wärmekonditionierungskreislauf (100) für einen Luftstrom (1), insbesondere für den Innenraum (2) eines Kraftfahrzeugs,
wobei der Kreislauf (100) einen Wärmetauscher (4) umfasst, der dazu eingerichtet ist, von einem Kältemittel durchströmt zu werden und Wärme mit dem Luftstrom (1) auszutauschen,
wobei der Wärmetauscher (4) wahlweise zumindest in folgenden Betriebsarten arbeiten kann:
- einem sogenannten Kühlmodus, in dem der Luftstrom (1) gekühlt wird,
- einem sogenannten Heizmodus, in dem der Luftstrom (1) erwärmt wird,
**dadurch gekennzeichnet, dass** der Wärmekonditionierungskreislauf (100) dazu eingerichtet ist:
- Ermittlung eines Feuchtigkeitsgrads in einem Bereich, der mit einer Außenfläche (5) des Wärmetauschers (4) in Kontakt steht,
- Erkennung einer Anweisung zum Umschalten vom Kühlmodus in den Heizmodus,
- Falls der ermittelte Feuchtigkeitsgrad (H) unter einem ersten vorbestimmten Schwellenwert (s1) liegt, Freigabe der Zirkulation des Kältemittels im Wärmetauscher (4) als Reaktion auf die Umschaltanweisung in den Heizmodus,
- Falls der ermittelte Feuchtigkeitsgrad (H) über einem zweiten vorbestimmten Schwellenwert (s2) liegt, Verhinderung der Zirkulation des Kältemittels im Wärmetauscher (4) für eine erste vorbestimmte Dauer (D1), um den Übergang in den Heizmodus zu verzögern,
wobei der zweite Schwellenwert (s2) größer oder gleich dem ersten Schwellenwert (s1) ist.

## Claims

1. A method for controlling a thermal conditioning circuit (100) for an air flow (1), in particular intended for a passenger compartment (2) of a motor vehicle,
the circuit comprising a heat exchanger (4) configured to be traversed by a refrigerant fluid and to exchange heat with the air flow (1),
the heat exchanger (4) being configured to operate selectively in at least:
- a so-called cooling mode in which the air flow (1) is cooled,
- a so-called heating mode in which the air flow (1) is heated,
**characterized in that** the method comprises the steps of:
- evaluating a level of humidity (H) in a region in contact with an outer surface (5) of the heat exchanger (4), (step 60)
- detecting a command to switch from the cooling mode to the heating mode, (step 61)
- if the evaluated humidity level (H) is lower than a first predetermined threshold (s1), allowing the circulation of refrigerant fluid in the heat exchanger (4) in response to the command to switch to the heating mode, (step 62)
- if the evaluated humidity level (H) is higher than a second predetermined threshold (s2), preventing the circulation of the refrigerant fluid in the heat exchanger (4) for a first predetermined duration (D1) in order to delay the switching to the heating mode, (step 63),
wherein the second threshold (s2) is greater than or equal to the first threshold (s1).

2. The control method according to the preceding claim, comprising the step of:
if the evaluated humidity level (H) is between the first predetermined threshold (s1) and the second predetermined threshold (s2), preventing the circulation of refrigerant fluid in the heat exchanger (4) for a second predetermined duration (D2) in order to delay the switching to the heating mode. (step 64)

3. The control method according to claim 1 or 2, wherein the thermal conditioning circuit (100) comprises a compression device (6) configured to increase the pressure of the refrigerant fluid, and wherein the prevention of circulation of the refrigerant fluid in the heat exchanger (4) is achieved by keeping the compression device (6) stopped.

4. The control method according to claim 1 or 2, wherein the prevention of circulation of the refrigerant fluid in the heat exchanger (4) is achieved by opening a bypass branch (7) allowing the refrigerant fluid to bypass the heat exchanger (4).

5. The control method according to any one of the preceding claims, wherein the circuit comprises an additional heating device (10) configured to heat the air flow (1), the method comprising the step of:
- during the step of preventing circulation of the refrigerant fluid in the heat exchanger (4), activating the additional heating device (10) to heat the air flow (1). (step 65)

6. The control method according to the preceding claim, comprising the step of:
- during the activation step of the additional heating device (10), ensuring a minimum value of the air flow (1) in thermal contact with the heat exchanger (4).

7. The control method according to any one of the preceding claims, comprising the steps of:
- determining a duration during which the heat exchanger (4) operates in cooling mode,
- if the cooling mode operation duration is greater than a third predetermined duration (D3), incrementing the evaluated humidity level (H) on the heat exchanger (4). (step 66)

8. The control method according to any one of the preceding claims, comprising the steps of:
- determining a duration during which the heat exchanger (4) operates in a mode different from the cooling mode,
- if the duration of operation in a mode different from the cooling mode is greater than a fourth predetermined duration (D4), decrementing the evaluated humidity level (H) on the heat exchanger (4). (step 67)

9. The control method according to any one of the preceding claims, comprising the steps of:
- upon vehicle shutdown, storing the evaluated humidity level (H) on the heat exchanger,
- upon vehicle startup, determining the stored humidity level (H) at shutdown,
- upon vehicle startup, determining a vehicle stop duration,
- if the stop duration is greater than a predetermined stop duration (Doff), assigning a null value to the evaluated humidity level (H) on the heat exchanger (4),
- if the stop duration is less than or equal to the predetermined stop duration (Doff), assigning the stored value to the evaluated humidity level (H) on the heat exchanger (4).

10. A thermal conditioning circuit (100) for an air flow (1), in particular intended for a passenger compartment (2) of a motor vehicle,
the circuit (100) comprising a heat exchanger (4) configured to be traversed by a refrigerant fluid and to exchange heat with the air flow (1),
the heat exchanger (4) being configured to operate selectively in at least:
- a so-called cooling mode in which the air flow (1) is cooled,
- a so-called heating mode in which the air flow (1) is heated,
the thermal conditioning circuit (100) being **characterized in that** it is configured to:
- evaluate a level of humidity in a region in contact with an outer surface (5) of the heat exchanger (4),
- detect a command to switch from the cooling mode to the heating mode,
- if the evaluated humidity level (H) is lower than a first predetermined threshold (s1), allow the circulation of refrigerant fluid in the heat exchanger (4) in response to the command to switch to the heating mode,
- if the evaluated humidity level (H) is higher than a second predetermined threshold (s2), prevent the circulation of the refrigerant fluid in the heat exchanger (4) for a first predetermined duration (D1) in order to delay the switching to the heating mode,
wherein the second threshold (s2) is greater than or equal to the first threshold (s1).
